# EUROPÄISCHE PATENTANMELDUNG

(11) **EP 2 491 845 A2**
(43) Veröffentlichungstag der Anmeldung: **29.08.2012**
(21) Anmeldenummer: 12000823.0
(22) Anmeldetag: 09.02.2012
(51) Int. Cl.: A47L 15/42, D06F 37/42, D06F 39/14, E05B 47/00

(54) **Elektronisches Haushaltsgerät**

(30) Priorität: 22.02.2011 DE 102011011956
(71) Anmelder: Diehl AKO Stiftung & Co. KG, 88239 Wangen (DE)
(72) Erfinder: Stohr, Ralph, 88299 Leutkirch (DE); Lyszus, Joachim, 88255 Baindt (DE)
(74) Vertreter: Diehl Patentabteilung

(57) **Zusammenfassung**

Ein elektronisches Haushaltsgerät (34) weist eine Steuervorrichtung (10) zum Steuern des Betriebs wenigstens eines Aggregats (14) des elektronischen Haushaltsgerätes, eine mittels einer Tür (36) verschließbare Beladeöffnung und einen Türkontakt (24) zum Erfassen eines Öffnungs- oder Schließzustandes der Tür (36) auf. Die Steuervorrichtung (10) ist dabei in einen Ruhemodus, vorzugsweise einen Zero-Power-Modus, schaltbar und der Türkontakt (24) gibt bei einer Änderung seines Schaltzustandes ein Aktivierungssignal (26) aus, welches die Steuervorrichtung (10) aus dem Ruhemodus in einen Normalbetriebsmodus schaltet.

## Beschreibung

Die vorliegende Erfindung betrifft ein elektronisches Haushaltsgerät, insbesondere ein elektronisches Haushaltsgerät mit einer in einen Ruhemodus schaltbaren Steuervorrichtung nach dem Oberbegriff des Anspruches 1 sowie ein Verfahren zum Betreiben, insbesondere zum Einschalten eines solchen elektronischen Haushaltsgerätes.

Es ist eine allgemeine Anforderung, den Energiebedarf elektronischer Geräte, wie zum Beispiel elektronischer Haushaltsgeräte, sowohl im Betriebszustand als auch im Ruhemodus möglichst gering zu halten. So wird zum Beispiel die Minimierung der Leistungsaufnahme energiebetriebener Geräte im ausgeschalteten Zustand gefordert. In einem solchen ausgeschalteten Zustand sind normalerweise alle Aggregate des Haushaltsgerätes elektrisch ausgeschaltet, d.h. von der Stromversorgung getrennt. Bei herkömmlichen Steuerschaltungen dieser Art bleibt jedoch die Steuervorrichtung auch im Stand-By-Betrieb weiter mit dem Versorgungsnetz verbunden und entnimmt diesem ständig Energie. Diese Energieentnahme kann ggf. mit zusätzlichem elektronischem Aufwand sehr klein gehalten werden.

Zum Einschalten bzw. Aufwecken des elektronischen Geräts bzw. seiner Steuervorrichtung kann die Bedieneinrichtung des Geräts zum Beispiel mit einer entsprechenden berührungsempfindlichen Einschalttaste versehen sein. Diese Einschalttaste muss jedoch permanent mit Energie versorgt werden, um das Gerät aus dem Stand-By-Modus in den Normalbetriebsmodus zu schalten. Aus diesem Grund ist ein Ruhemodus in Form eines so genannten Zero-Power-Modus ohne messbaren Energieverbrauch nicht möglich.

Ein anderer Ansatz ist die Verwendung eines Schalters, der die Steuerelektronik im Ruhemodus vollständig vom Versorgungsnetz trennt und damit eine weitere Energieentnahme vermeidet. Ein solches Trennen der Steuerelektronik vom Versorgungsnetz erfordert dann ein Wiedereinschalten des Geräts zum erneuten Betrieb, das keine Stromversorgung benötigt, da die Steuerelektronik zu diesem Zeitpunkt noch vom Versorgungsnetz getrennt ist. Zu diesem Zweck kann die Bedieneinrichtung des Geräts mit einem mechanischen Hauptschalter ausgestattet werden. Ein solcher mechanischer Hauptschalter benötigt allerdings im Allgemeinen eine Bedieneinrichtung bzw. Blende mit entsprechenden Durchbrüchen.

Es ist eine Aufgabe der vorliegenden Erfindung, ein elektronisches Haushaltsgerät mit möglichst geringem Energieverbrauch im Ruhemodus zu schaffen.

Diese Aufgabe wird gelöst durch ein elektronisches Haushaltsgerät mit den Merkmalen des Anspruchs 1 bzw. ein Verfahren zum Betreiben eines elektronischen Haushaltsgerätes mit den Merkmalen des Anspruchs 7. Vorteilhafte Ausgestaltungen und Weiterbildungen der Erfindung sind Gegenstand der abhängigen Ansprüche.

Das elektronische Haushaltsgerät weist eine Steuervorrichtung zum Steuern des Betriebs wenigstens eines Aggregats des elektronischen Haushaltsgerätes, eine mittels einer Tür verschließbare Beladeöffnung und einen Türkontakt zum Erfassen eines Öffnungs- oder Schließzustandes der Tür auf. Die Steuervorrichtung ist in einen Ruhemodus, vorzugsweise einen Zero-Power-Modus, schaltbar. Das Haushaltsgerät ist erfindungsgemäß dadurch gekennzeichnet, dass der Türkontakt bei einer Änderung seines Schaltzustandes ein Aktivierungssignal ausgibt, welches die Steuervorrichtung aus dem Ruhemodus in einen Normalbetriebsmodus schaltet.

Elektronische Haushaltsgeräte mit einer Beladeöffnung, die mittels einer Tür verschließbar ist, weisen üblicherweise auch einen Türkontakt zum Erfassen eines Öffnungs- oder Schließzustandes dieser Tür auf, um einen sicheren Betrieb des Haushaltsgerätes zu gewährleisten. Dieser ohnehin vorhandene Türkontakt wird gemäß der vorliegenden Erfindung nun auch dazu verwendet, um das elektronische Haushaltsgerät bzw. seine Steuervorrichtung aus dem Ruhemodus aufzuwecken bzw. in den Normalbetriebsmodus zu schalten.

Es kann somit auf spezielle mechanische Hauptschalter und deren Verkabelung, auf Bedienblenden mit Durchbrüchen und dergleichen verzichtet werden. Durch diese Doppelnutzung des Türkontaktes kann der Verkabelungs- und Montageaufwand für das Haushaltsgerät deutlich reduziert werden.

Das Einschalten bzw. Aufwecken des Haushaltsgerätes erfolgt durch den Benutzer intuitiv durch Betätigen, d.h. Öffnen oder Schließen der Tür der Beladeöffnung.

Da es auf einfache Weise möglich ist, dass der Türkontakt das Aktivierungssignal für die Steuervorrichtung ohne eigenen Energiebedarf erzeugt, kann der Ruhemodus des elektronischen Haushaltsgerätes als Zero-Power-Modus ausgestaltet sein. Im Zero-Power-Modus liegt kein messbarer Energieverbrauch vor, d.h. der Energieverbrauch des elektronischen Haushaltsgerätes liegt in diesem Zustand unterhalb von etwa 500 mW, vorzugsweise unterhalb von etwa 100 mW.

Zur Realisierung des erfindungsgemäßen Lösungsvorschlages ist keine aufwändige Hardwareentwicklung von Netzteilen bzw. deren Layouts notwendig. Auch können aktuelle Produkte auf einfache Weise angepasst werden.

Die Erfindung eignet sich in vorteilhafter Weise für alle elektronischen Haushaltsgeräte mit einer mittels einer Tür verschließbare Beladeöffnung, wie zum Beispiel Waschmaschinen, Wäschetrocknern, kombinierte Waschtrockner, Geschirrspüler, Mikrowellenöfen und dergleichen.

Unter dem "Ruhemodus" der Steuervorrichtung bzw. des elektronischen Haushaltsgerätes wird in diesem Zusammenhang insbesondere sowohl ein Stand-By-Modus (mit sehr geringem Energieverbrauch) als auch ein Zero-Power-Modus (stromloser Zustand ohne messbaren Energieverbrauch) verstanden. Der "Normalbetriebsmodus" soll in diesem Zusammenhang den normalen Betriebsmodus des elektronischen Haushaltsgerätes, in welchem dieses mit dem Versorgungsnetz verbunden ist und diesem Energie entnimmt, verstanden werden.

Der "Türkontakt" ist eine beliebige Vorrichtung zum Erfassen des Öffnungs- oder Schließzustandes der Tür der Beladeöffnung. Der "Schaltzustand" dieses Türkontaktes entspricht eben diesem Öffnungszustand oder Schließzustand der Tür bzw. gibt diesen an. Dies bedeutet, dass sich der Schaltzustand des Türkontaktes sowohl beim Öffnen der Tür als auch beim Schließen der Tür ändert.

In einer vorteilhaften Ausgestaltung der Erfindung weist der Türkontakt einen Pulsgeber zum Erzeugen eines elektrischen Impulses als Aktivierungssignal auf. Ein solcher elektrischer Impuls reicht aus, um die Steuervorrichtung einzuschalten bzw. aus dem Ruhemodus aufzuwecken. Außerdem benötigt ein Türkontakt mit einem solchen Pulsgeber keine Energieversorgung zum Erzeugen des Aktivierungssignals, so dass als Ruhemodus der Zero-Power-Modus realisiert werden kann.

In einer weiteren vorteilhaften Ausgestaltung der Erfindung ist die Steuervorrichtung mit einer Schalteinrichtung mit Selbsthaltefunktion versehen, welche in einer Versorgungsleitung angeordnet ist, über welche die Steuervorrichtung mit einem Versorgungsnetz verbindbar ist. Das Aktivierungssignal des Türkontaktes schaltet dann diese Schalteinrichtung in einen die Steuervorrichtung mit dem Versorgungsnetz verbindenden Schaltzustand, um die Steuervorrichtung in den Normalbetriebsmodus zu versetzen.

Bei der "Schalteinrichtung mit Selbsthaltefunktion" handelt es sich um eine Schalteinrichtung, deren Schaltzustand durch einen elektrischen Impuls verändert werden kann und die ihren Schaltzustand dann ohne weitere äußere Einflüsse unverändert beibehält (bistabiles Schaltverhalten). Eine solche Schalteinrichtung mit Selbsthaltefunktion ist zum Beispiel ein bistabiles Relais oder ein Relais mit Selbsthaltungsbeschaltung.

Diese Schalteinrichtung mit Selbsthaltefunktion kann wahlweise in die Steuervorrichtung integriert sein oder als separate Komponente mit dieser verbunden sein.

Im Rahmen der vorliegenden Erfindung kann der Türkontakt das Aktivierungssignal nur beim Öffnen der Tür, nur beim Schließen der Tür oder sowohl beim Öffnen als auch beim Schließen der Tür erzeugen. Die optimale Wahl für das Erzeugen des Aktivierungssignals durch den Türkontakt hängt insbesondere von der Art des elektronischen Haushaltsgerätes und seiner üblichen Bedienung ab.

In einer vorteilhaften Ausgestaltung der Erfindung ist die Steuervorrichtung mit einem Timer und einer Deaktivierungseinrichtung zum automatischen Schalten der Steuervorrichtung aus dem Normalbetriebsmodus in den Ruhemodus nach einer vorbestimmten Zeitdauer ohne Betätigung einer Bedieneinrichtung durch einen Benutzer oder einem weiteren Signal (Aktivierungssignal oder anderes Signal) des Türkontaktes nach dem Erzeugen eines Aktivierungssignals durch den Türkontakt versehen. Mit dieser Ausgestaltung kann erreicht werden, dass sich das elektronische Haushaltsgerät bzw. seine Steuervorrichtung nicht unnötig lange im Normalbetriebsmodus mit Energieverbrauch befindet, wenn der Benutzer das Haushaltsgerät gar nicht benutzen möchte, sondern die Tür der Beladeöffnung aus einem anderen Grund betätigt hat.

Der Timer und/oder die Deaktivierungseinrichtung können wahlweise in die Steuervorrichtung integriert sein oder als separate Komponente mit dieser verbunden sein. Die Deaktivierungseinrichtung sendet zum Beispiel einen elektrischen Impuls (direkt oder mittelbar an die Schalteinrichtung), um die Schalteinrichtung in einen die Steuervorrichtung von dem Versorgungsnetz trennenden Schaltzustand zu schalten.

In einer weiteren vorteilhaften Ausgestaltung der Erfindung ist die Steuervorrichtung mit einem Timer und einer Deaktivierungseinrichtung zum automatischen Schalten der Steuervorrichtung aus dem Normalbetriebsmodus in den Ruhemodus nach einer vorbestimmten Zeitdauer nach einer Beendigung eines vorbestimmten Programmablaufes des Haushaltsgerätes versehen. Mit dieser Ausgestaltung kann erreicht werden, dass das elektronische Haushaltsgerät bzw. seine Steuervorrichtung nach einem Programmende (z.B. Ende des Waschprogramms einer Waschmaschine) nicht unnötig lange im Energie verbrauchenden Normalbetriebsmodus verbleibt. Insbesondere kann dies automatisch, d.h. ohne ein Eingreifen des Benutzers erreicht werden.

Der Timer und/oder die Deaktivierungseinrichtung können wahlweise in die Steuervorrichtung integriert sein oder als separate Komponente mit dieser verbunden sein. Die Deaktivierungseinrichtung sendet zum Beispiel einen elektrischen Impuls, um die Schalteinrichtung in einen die Steuervorrichtung von dem Versorgungsnetz trennenden Schaltzustand zu schalten.

Das erfindungsgemäße Verfahren zum Betreiben, insbesondere zum Einschalten eines elektronisches Haushaltsgerätes mit einer Steuervorrichtung zum Steuern des Betriebs wenigstens eines Aggregats des elektronischen Haushaltsgerätes und einer mittels einer Tür verschließbaren Beladeöffnung ist dadurch gekennzeichnet, dass die Steuervorrichtung beim Öffnen oder Schließen der Tür von einem Ruhemodus, vorzugsweise einem Zero-Power-Modus, in einen Normalbetriebsmodus versetzt wird.

In einer vorteilhaften Ausgestaltung der Erfindung ist die Steuervorrichtung mit einer Schalteinrichtung mit Selbsthaltefunktion versehen, welche in einer Versorgungsleitung angeordnet ist, über welche die Steuervorrichtung mit einem Versorgungsnetz verbindbar ist. In diesem Fall wird diese Schalteinrichtung beim Öffnen oder Schließen der Tür in einen die Steuervorrichtung mit dem Versorgungsnetz verbindenden Schaltzustand versetzt.

Die Steuervorrichtung kann wahlweise nur beim Öffnen der Tür, nur beim Schließen der Tür oder sowohl beim Öffnen als auch beim Schließen der Tür von dem Ruhemodus in den Normalbetriebsmodus versetzt werden. Die optimale Wahl des Verfahrens hängt insbesondere von der Art des elektronischen Haushaltsgerätes und seiner üblichen Bedienung ab.

In einer weiteren vorteilhaften Ausgestaltung der Erfindung wird die Steuervorrichtung nach einer vorbestimmten Zeitdauer ohne Betätigung einer Bedieneinrichtung durch einen Benutzer oder einer weiteren Betätigung der Tür nach dem Öffnen oder Schließen der Tür automatisch wieder aus dem Normalbetriebsmodus in den Ruhemodus versetzt. Hierdurch kann erreicht werden, dass das elektronische Haushaltsgerät bzw. seine Steuervorrichtung nicht unnötig lange im Normalbetriebsmodus verbleibt und Energie verbraucht, obwohl der Benutzer das Haushaltsgerät gar nicht benutzen möchte, sondern die Tür der Beladeöffnung aus einem anderen Grund betätigt hat.

Obige sowie weitere Merkmale und Vorteile der Erfindung werden aus der nachfolgenden Beschreibung bevorzugter, nicht-einschränkender Ausführungsbeispiele unter Bezug auf die beiliegenden Zeichnungen besser verständlich. Darin zeigen:

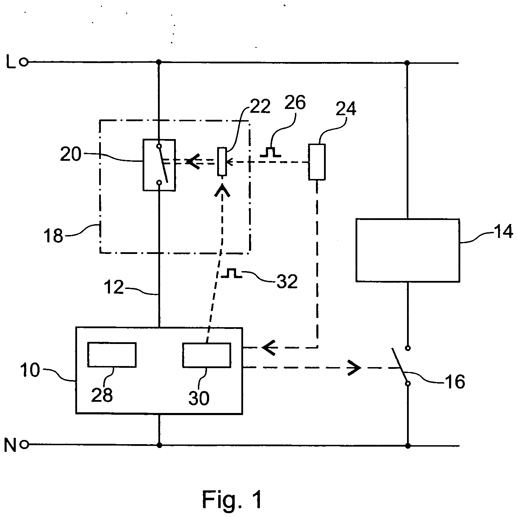

- Fig. 1: eine schematische Darstellung des Aufbaus eines elektronischen Haushaltsgerätes gemäß einem Ausführungsbeispiel der vorliegenden Erfindung; und
- Fig.2: ein vereinfachtes Flussdiagramm zur Veranschaulichung der Funktionsweise des elektronischen Haushaltsgerätes von Fig. 1 gemäß einer bevorzugten Ausführungsform.

Das elektronische Haushaltsgerät, zum Beispiel eine Waschmaschine, enthält insbesondere eine Steuervorrichtung 10, die über eine Versorgungsleitung 12 mit den Anschlüssen L und N eines Versorgungsnetzes verbunden ist. Das Aggregat bzw. die Aggregate 14 des Haushaltsgerätes, zum Beispiel ein Antriebsmotor der Wäschetrommel der Waschmaschine, werden von der Steuervorrichtung 10 über ein Schaltelement 16 in an sich bekannter Weise angesteuert.

In der Versorgungsleitung 12 der Steuervorrichtung 10 ist eine Schalteinrichtung 18 vorgesehen, welche wahlweise in die Steuervorrichtung 10 integriert sein kann oder als separate Komponente ausgestaltet sein kann. Diese Schalteinrichtung 18 dient dem wahlweisen Verbinden der Steuervorrichtung 10 mit dem Versorgungsnetz L, N (d.h. Einschalten der Steuervorrichtung und damit des Haushaltsgerätes) bzw. von dem Versorgungsnetz L, N (d.h. Ausschalten der Steuervorrichtung und damit des Haushaltsgerätes) im Ruhemodus des Haushaltsgerätes. In der bevorzugten Ausführungsform handelt es sich bei dem Ruhemodus der Steuervorrichtung 10 bzw. des elektronischen Haushaltsgerätes um einen Zero-Power-Modus ohne messbaren Energieverbrauch.

Die Schalteinrichtung 18 enthält einen Schaltkontakt 20, der in der Versorgungsleitung 12 angeordnet ist. Bei geschlossenem Schaltkontakt 20 ist die Steuervorrichtung 10 mit dem Versorgungsnetz L, N verbunden, bei geöffnetem Schaltkontakt 20 ist die Steuervorrichtung 10 von dem Versorgungsnetz L, N getrennt.

Der Schaltkontakt 20 besitzt ein bistabiles Schaltverhalten. D.h. der Schaltkontakt 20 bleibt so lange in einem der zwei Schaltzustände (geöffnet, geschlossen) bis sein Schaltzustand bewusst geändert wird. Als Schaltkontakt 20 kann beispielsweise ein bistabiles Relais oder ein Relais mit Selbsthaltungsbeschaltung verwendet werden. Zum Öffnen oder Schließen des Schaltkontaktes 20 ist ein geeignetes Stellglied 22 vorgesehen.

Das elektronische Haushaltsgerät verfügt weiter über eine Beladeöffnung, die durch eine Tür verschlossen werden kann. Über die Beladeöffnung kann zum Beispiel Wäsche in eine Wäschetrommel einer Waschmaschine gefüllt werden. Diese Tür ist in üblicher Weise mit einem Türkontakt 24 versehen, der einen Öffnungs- oder Schließzustand der Tür erfassen kann und diesen an die Steuervorrichtung 10 mitteilt. Mit Hilfe des Türkontaktes 24 kann ein sicherer Betrieb des elektronischen Haushaltsgerätes gewährleistet werden, sodass zum Beispiel ein Antrieb der Wäschetrommel bei geöffneter Tür verhindert wird.

Bei einer Änderung des Schaltzustandes des Türkontaktes 24 erzeugt dieses ein Aktivierungssignal 26 in Form eines elektrischen Impulses, der dem Stellglied 22 zugeführt wird. Die kurzzeitige Spannungsversorgung des Stellgliedes 22 durch den elektrischen Impuls von dem Türkontakt 24 genügt, um das Stellglied 22 zu betätigen, um einen Veränderung des Schaltzustandes des Schaltkontaktes 20 in den geschlossenen Zustand zu bewirken. Das Aktivierungssignal 26 des Türkontaktes 24 bewirkt somit ein Schließen des Schaltkontaktes 20 der Schalteinrichtung 18 und damit ein Verbinden der Steuervorrichtung 10 mit dem Versorgungsnetz L, N. Auf diese Weise werden die Steuervorrichtung 10 und damit das Haushaltsgerät eingeschaltet bzw. aus dem Ruhemodus in den Normalbetriebsmodus versetzt (aufgeweckt). Die Steuervorrichtung 10 verfügt vorzugsweise über einen nichtflüchtigen Speicher, in dem sie den aktuellen Zustand des Haushaltsgerätes abspeichern und nach dem Aufwecken wieder rekonstruieren kann.

Die Steuervorrichtung 10 ist ferner mit einem Timer und einer Deaktivierungseinrichtung 30 ausgestattet. Nach Ablauf einer vorbestimmten Zeitdauer, die durch den Timer 28 erfasst wird, erzeugt die Deaktivierungseinrichtung 30 der Steuervorrichtung 10 ein Deaktivierungssignal 32 in Form eines elektrischen Impulses, der dem Stellglied 22 der Schalteinrichtung 18 zugeführt wird. Das Deaktivierungssignal 32 der Steuervorrichtung 10 bewirkt so ein Öffnen des Schaltkontaktes 20 der Schalteinrichtung 18 und damit ein Trennen der Steuervorrichtung 10 von dem Versorgungsnetz L, N, sodass die Steuervorrichtung 10 und damit das Haushaltsgerät in einen Zero-Power-Modus ohne messbaren Energieverbrauch versetzt werden.

Während das wie oben beschrieben aufgebaute elektronische Haushaltsgerät zum Beispiel nach einem Ende eines durchlaufenen Betriebsprogramms von der Steuervorrichtung 10 automatisch in den Ruhemodus, vorzugsweise in einen Zero-Power-Modus, versetzt wird, erfolgt das Einschalten des Haushaltsgerätes bzw. seiner Steuervorrichtung 10 durch den Benutzer intuitiv durch Betätigen (Öffnen oder Schließen) der Tür der Beladeöffnung des Haushaltsgerätes, ohne dass von dem Benutzer ein spezieller Hauptschalter (z.B. in der Bedienblende) betätigt werden muss.

Anhand von Figur zwei wird nun eine mögliche Funktionsweise eines derart konfigurierten elektronischen Haushaltsgerätes gemäß der vorliegenden Erfindung näher erläutert. In den einzelnen Schritten sind dabei jeweils das Haushaltsgerät 34 und die geschlossene oder geöffnete Tür 36 der Beladeöffnung veranschaulicht. Außerdem wird die Erfindung hier anhand eines Ausführungsbeispiels beschrieben, bei dem der Türkontakt 24 ausschließlich beim Öffnen der Tür 36 ein Aktivierungssignal 26 erzeugt, nicht jedoch auch beim Schließen der Tür 36.

In Schritt S1 befindet sich das Haushaltsgerät 34 bzw. seine Steuervorrichtung 10 im Ruhemodus, vorzugsweise im Zero-Power-Modus, und die Tür 36 der Beladeöffnung ist geschlossen. Wird nun die Tür 36 vom Benutzer geöffnet, so wird das Haushaltsgerät 34 aus dem Ruhemodus in den Normalbetriebsmodus versetzt und ist betriebsbereit. Der Benutzer kann nun zum Beispiel durch die geöffnete Beladeöffnung Wäsche in die Wäschetrommel einfüllen.

Bleibt der Benutzer nach dem Öffnen der Tür 36 für eine gewisse Zeitdauer T von mehr als x1 Minuten untätig, so erzeugt die Steuervorrichtung 10 wie oben beschrieben ein Deaktivierungssignal 32, um das Haushaltsgerät 34 wieder in den Zero-Power-Modus zu versetzen (Schritt S8). Ein anschließendes Schließen der Tür 36 belässt das Haushaltsgerät 34 im Zero-Power-Modus (S8 -> S1), da im vorliegenden Ausführungsbeispiel der Türkontakt 24 nur beim Öffnen der Tür 36 ein Aktivierungssignal 26 erzeugt.

Wird hingegen nach Schritt S2 die Tür 36 innerhalb der vorgegebenen Zeitdauer von x1 Minuten geschlossen, so bleibt das Haushaltsgerät 34 zunächst im Normalbetriebsmodus (S2 -> S3). Bleibt der Benutzer anschließend aber für eine gewisse Zeitdauer T von mehr als x2 Minuten untätig, so wird das Haushaltsgerät 34 wieder in den Zero-Power-Modus versetzt (S3 -> S1). Betätigt der Benutzer hingegen innerhalb der vorbestimmten Zeitdauer von x2 Minuten die Bedieneinrichtung des Haushaltsgerätes 34, so bleibt das Haushaltsgerät 34 weiter im Normalbetriebsmodus und führt zum Beispiel ein eingestelltes Programm (z.B. Wasch- oder Schleuderprogramm) aus (Schritt S4).

Betätigt der Benutzer nach dem Einfüllen der Wäsche in Schritt S2 zunächst die Bedieneinrichtung des Haushaltsgerätes 34 und schließt erst darauf die Tür 36, so bleibt das Haushaltsgerät ebenfalls im Normalbetriebsmodus, beginnt aber unmittelbar nach dem Schließen der Tür 36 mit der Durchführung des eingestellten Programms (S2 -> S4).

Auch nach Beendigung des Programmablaufs in Schritt S4 bleibt das Haushaltsgerät 34 zunächst im Normalbetriebsmodus (Schritt S5). Dem Benutzer wird vorzugsweise über die Bedieneinrichtung das Ende des Programms angezeigt.

Falls der Benutzer nicht innerhalb einer vorgegebenen Zeitdauer T von x3 Minuten eine Betätigung der Bedieneinrichtung vornimmt oder die Tür 36 der Beladeöffnung öffnet, so versetzt die Steuervorrichtung 10 sich selbst bzw. das Haushaltsgerät 34 über die Deaktivierungseinrichtung 30 und die Schalteinrichtung 18 in den energiesparenden Zero-Power-Modus (S5 -> S7).

Wenn der Benutzer hingegen die Tür 36 der Beladeöffnung innerhalb von x3 Minuten öffnet, um zum Beispiel die gewaschene Wäsche aus der Wäschetrommel zu entnehmen, so bleibt das Haushaltsgerät 34 weiter in seinem Normalbetriebsmodus (Schritt S6). Öffnet der Benutzer die Tür 36 dagegen erst später, so wird das Öffnen der Tür durch den Türkontakt 24 erkannt, der daraufhin ein Aktivierungssignal 26 erzeugt, wodurch die Steuervorrichtung 10 und das Haushaltsgerät aus dem zwischenzeitlichen Zero-Power-Modus wieder in den Normalbetriebsmodus aufgeweckt werden (S7 -> S6).

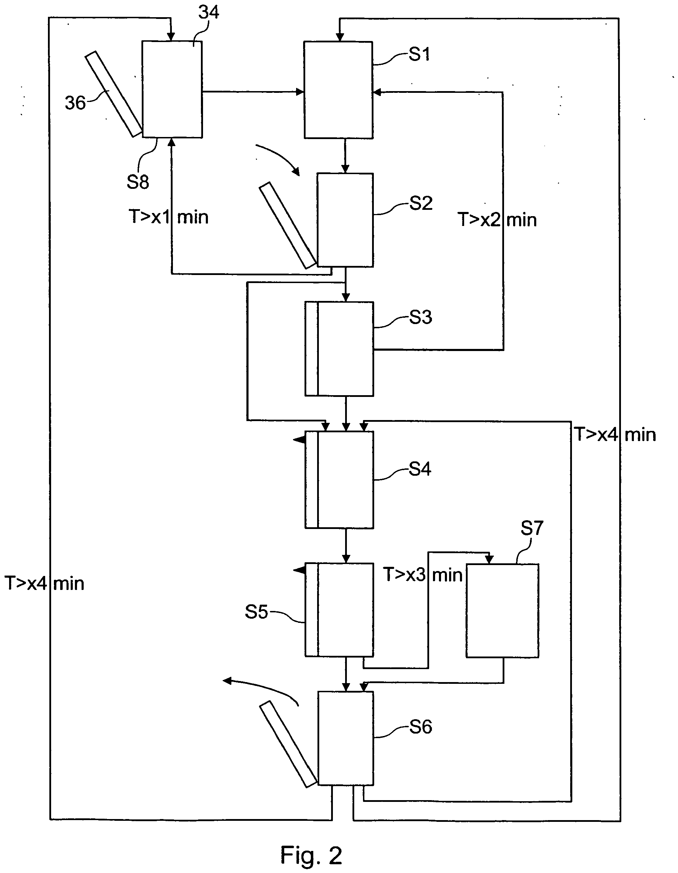

Falls der Benutzer nach Schritt S6 ein weiteres Programm (z.B. Schleudern der Wäsche) durchzuführen wünscht, so kann er die Tür 36 wieder schließen und seinen Programmwunsch über die Bedieneinrichtung eingeben. Der Ablauf in Fig. 2 kehrt dementsprechend wieder zu Schritt S4 zurück (S6 -> S4).

Wenn nach Schritt S6 dagegen (zumindest zunächst) kein weiterer Programmablauf folgen soll und der Benutzer deshalb die Bedieneinrichtung des Haushaltsgerätes nicht betätigt, so werden die Steuervorrichtung 10 und das Haushaltsgerät 34 nach Ablauf einer vorgegebenen Zeitdauer T von x4 Minuten in den Zero-Power-Modus versetzt, um Energie zu sparen. Dies geschieht unabhängig davon, ob der Benutzer die Tür 36 wieder schließt (S6 -> S1) oder offen lässt (S6 -> S8). Auch ein späteres Schließen der Tür 36 belässt das Haushaltsgerät 34 im Zero-Power-Modus, da der Türkontakt 24 in diesem Ausführungsbeispiel nur beim Öffnen der Tür 36 ein Aktivierungssignal 26 ausgibt.

Die oben genannten Zeitdauern T von x1, x2, x3 und x4 Minuten können wahlweise gleich zueinander oder unterschiedlich gewählt werden. Sie liegen vorzugsweise im Bereich von 1 bis mehreren Minuten bis hin zu etwa 1 Stunde. Während die Steuervorrichtung 10 in diesem Ausführungsbeispiel über eine Deaktivierungseinrichtung 30 zum automatischen Ausschalten des Haushaltsgerätes in den Ruhemodus zu bewirken, kann das Haushaltsgerät alternativ oder zusätzlich auch ein (vorzugsweise berührungs- und/oder annäherungsempfindliches) Schaltelement aufweisen (z.B. in der Bedienblende), bei dessen Betätigung die Steuervorrichtung 10 und das Haushaltsgerät vom Benutzer bei Bedarf in den Ruhemodus bzw. Zero-Power-Modus versetzt werden können.

Die vorstehende Beschreibung gilt analog für eine Geschirrspülmaschine, einen Wäschetrockner, einen Mikrowellenofen, etc.

## Patentansprüche

1. Elektronisches Haushaltsgerät (34), mit
einer Steuervorrichtung (10) zum Steuern des Betriebs wenigstens eines Aggregats (14) des elektronischen Haushaltsgerätes, wobei die Steuervorrichtung (10) in einen Ruhemodus, vorzugsweise einen Zero-Power-Modus, schaltbar ist;
einer mittels einer Tür (36) verschließbaren Beladeöffnung; und
einem Türkontakt (24) zum Erfassen eines Öffnungs- oder Schließzustandes der Tür (36),
**dadurch gekennzeichnet, dass**
der Türkontakt (24) bei einer Änderung seines Schaltzustandes ein Aktivierungssignal (26) ausgibt, welches die Steuervorrichtung (10) aus dem Ruhemodus in einen Normalbetriebsmodus schaltet.

2. Elektronisches Haushaltsgerät nach Anspruch 1,
**dadurch gekennzeichnet, dass**
der Türkontakt (24) einen Pulsgeber zum Erzeugen eines elektrischen Impulses (26) als Aktivierungssignal aufweist.

3. Elektronisches Haushaltsgerät nach Anspruch 1 oder 2,
**dadurch gekennzeichnet, dass**
die Steuervorrichtung (10) mit einer Schalteinrichtung (18) mit Selbsthaltefunktion versehen ist, welche in einer Versorgungsleitung (12) angeordnet ist, über welche die Steuervorrichtung (10) mit einem Versorgungsnetz (L, N) verbindbar ist; und
das Aktivierungssignal (26) des Türkontaktes (24) diese Schalteinrichtung (18) in einen die Steuervorrichtung (10) mit dem Versorgungsnetz (L, N) verbindenden Schaltzustand schaltet.

4. Elektronisches Haushaltsgerät nach einem der vorhergehenden Ansprüche,
**dadurch gekennzeichnet, dass**
der Türkontakt (24) das Aktivierungssignal (26) nur beim Öffnen der Tür, nur beim Schließen der Tür oder sowohl beim Öffnen als auch beim Schließen der Tür erzeugt.

5. Elektronisches Haushaltsgerät nach einem der vorhergehenden Ansprüche,
**dadurch gekennzeichnet, dass**
die Steuervorrichtung (10) mit einem Timer (28) und einer Deaktivierungseinrichtung (30) zum automatischen Schalten der Steuervorrichtung aus dem Normalbetriebsmodus in den Ruhemodus nach einer vorbestimmten Zeitdauer ohne Betätigung einer Bedieneinrichtung durch einen Benutzer oder einem weiteren Signal des Türkontaktes (24) nach dem Erzeugen eines Aktivierungssignals (26) durch den Türkontakt (24) versehen ist.

6. Elektronisches Haushaltsgerät nach einem der vorhergehenden Ansprüche,
**dadurch gekennzeichnet, dass**
die Steuervorrichtung (10) mit einem Timer (28) und einer Deaktivierungseinrichtung (30) zum automatischen Schalten der Steuervorrichtung aus dem Normalbetriebsmodus in den Ruhemodus nach einer vorbestimmten Zeitdauer nach einer Beendigung eines vorbestimmten Programmablaufes des Haushaltsgerätes (34) versehen ist.

7. Verfahren zum Betreiben, insbesondere zum Einschalten eines elektronisches Haushaltsgerätes (34) mit einer Steuervorrichtung (10) zum Steuern des Betriebs wenigstens eines Aggregats (14) des elektronischen Haushaltsgerätes und einer mittels einer Tür (36) verschließbaren Beladeöffnung,
**dadurch gekennzeichnet, dass**
die Steuervorrichtung (10) beim Öffnen oder Schließen der Tür (36) von einem Ruhemodus, vorzugsweise einem Zero-Power-Modus, in einen Normalbetriebsmodus versetzt wird.

8. Verfahren nach Anspruch 7,
**dadurch gekennzeichnet, dass**
die Steuervorrichtung (10) mit einer Schalteinrichtung (18) mit Selbsthaltefunktion versehen ist, welche in einer Versorgungsleitung (12) angeordnet ist, über welche die Steuervorrichtung (10) mit einem Versorgungsnetz (L, N) verbindbar ist; und
diese Schalteinrichtung (18) beim Öffnen oder Schließen der Tür (36) in einen die Steuervorrichtung (10) mit dem Versorgungsnetz (L, N) verbindenden Schaltzustand versetzt wird.

9. Verfahren nach Anspruch 7 oder 8,
**dadurch gekennzeichnet, dass**
die Steuervorrichtung (10) nur beim Öffnen der Tür, nur beim Schließen der Tür oder sowohl beim Öffnen als auch beim Schließen der Tür von dem Ruhemodus in den Normalbetriebsmodus versetzt wird.

10. Verfahren nach einem der Ansprüche 7 bis 9,
**dadurch gekennzeichnet, dass**
die Steuervorrichtung (10) nach einer vorbestimmten Zeitdauer ohne Betätigung einer Bedieneinrichtung durch einen Benutzer oder einer weiteren Betätigung der Tür nach dem Öffnen oder Schließen der Tür automatisch wieder aus dem Normalbetriebsmodus in den Ruhemodus versetzt wird.
